# EUROPEAN PATENT SPECIFICATION

(11) **EP 4 427 891 B1**
(45) Date of publication and mention of the grant of the patent: **02.12.2026**
(21) Application number: 22889809.4
(22) Date of filing: 21.10.2022
(51) Int. Cl.: B25J 13/00, B65G 59/04, B65G 47/91, B25J 9/16

(54) **WORKPIECE SUPPLY SYSTEM, WORKPIECE SUPPLY METHOD, AND WORKPIECE SUPPLY PROGRAM**
WERKSTÜCKZUFÜHRSYSTEM, WERKSTÜCKZUFÜHRVERFAHREN UND WERKSTÜCKZUFÜHRPROGRAMM
SYSTÈME D'ALIMENTATION DE PIÈCES À TRAVAILLER, PROCÉDÉ D'ALIMENTATION DE PIÈCES À TRAVAILLER ET PROGRAMME D'ALIMENTATION DE PIÈCES À TRAVAILLER

(30) Priority: 04.11.2021 JP 2021180533
(43) Date of publication of application: 11.09.2024
(73) Proprietor: Amada Co., Ltd., Isehara-shi, Kanagawa 259-1196 (JP)
(72) Inventor: IWANAGA, Hiroshi, Isehara-shi, Kanagawa 259-1196 (JP)
(74) Representative: Grünecker Patent- und Rechtsanwälte PartG mbB
(86) International application number: PCT/JP2022/039385
(87) International publication number: WO 2023/079989

(56) References cited:
- CN-U- 211 643 899
- JP-A- 2002 361 583
- JP-A- 2004 175 541
- JP-A- 2016 135 512
- JP-A- 2020 163 553
- JP-A- H0 243 143
- US-A- 5 033 730
- US-A1- 2017 246 744
- US-A1- 2020 306 964
- GARABINI MANOLO ET AL: "WRAPP-up: A Dual-Arm Robot for Intralogistics", IEEE ROBOTICS & AUTOMATION MAGAZINE, IEEE SERVICE CENTER, PISCATAWAY, NJ, US, vol. 28, no. 3, 5 October 2020 (2020-10-05), pages 50 - 66, XP011877162, ISSN: 1070-9932, [retrieved on 20210909], DOI: 10.1109/MRA.2020.3015899

## Description

### Technical Field

The present invention relates to a workpiece supply system, a workpiece supply method, and a workpiece supply program.

### Background Art

Conventionally, there has been known a workpiece handling device including a workpiece processing unit (Patent Literature 1, and the like). The workpiece processing unit approaches a workpiece loading unit on which a plurality of sheets of workpieces are loaded, lifts an uppermost workpiece, and holds the uppermost workpiece in a substantially vertical state. Further, the workpiece processing unit is configured such that a workpiece handling robot can grip a desired surface of the workpiece that has been held.

In the workpiece handling device of Patent Literature 1, the workpiece processing unit grips an end edge portion of the uppermost workpiece loaded on the workpiece loading unit and pivotally moves it so as to be in the substantially vertical state. According to the workpiece handling device of Patent Literature 1, only the uppermost workpiece can be lifted to be removed, and thus the possibility of lifting two or more workpieces at the same time can be reduced.
The publication GARABINI MANOLO ET AL: "WRAPP-up: A Dual-Arm Robot for Intralogistics", IEEE ROBOTICS & AUTOMATION MAGAZINE, IEEE SERVICE CENTER, PISCATAWAY, NJ, US, vol. 28, no. 3, 5 October 2020, pages 50-66, XP011877162, ISSN: 1070-9932, DOI: 10.1109/MRA.2020.3015899 [retrieved on 2021-09-09] discloses a dual-arm robot for intralogistics.

### Citation List

### Patent Literature

Patent Literature 1: JP H5-38521 A
Patent Literature 2: JP 2018-120388 A

### Summary

### Technical Problem

Now, there has been known a processing system configured to control a workpiece holding robot based on information on a specified position and stacking height of a workpiece by photographing an entire mounting place with a single camera installed directly above a center of the mounting place and then specifying the position and the stacking height of the workpiece based on an image of the photographed workpiece (Patent Literature 2 and the like). With such a configuration, the position of the workpiece can be grasped wherever the workpiece is stacked on the mounting place so that the workpiece holding robot can hold the workpiece.

However, in the workpiece handling device of Patent Literature 1, since the workpiece processing unit always grips the end edge portion of the workpiece at a fixed position of the workpiece loading unit so as to pivotally move the workpiece, it is necessary to load the workpiece at a specific position of the workpiece loading unit. As a result, there is a problem that the advantage of the processing system described above cannot be utilized.

One aspect of the present invention is a workpiece supply system, a workpiece supply method, and a workpiece supply program that enable only an uppermost workpiece to be held regardless of a stacking position of a workpiece group.

### Solution to Problem

The present invention is defined in the independent claims. Preferred embodiments are laid down in the dependent claims.

With the workpiece supply system, the workpiece supply method, and the workpiece supply program according to the present invention, separating the uppermost workpiece from the workpiece group with, as the pivot center, the opposed portion opposed to the portion of the workpiece nearest to the specified holding position of the robotic hand enables only the uppermost workpiece to be held regardless of where the workpiece group is stacked on the workpiece mounting table.

### Advantageous Effect of Invention

With a workpiece supply system, a workpiece supply method, and a workpiece supply program according to one aspect of the present invention, only an uppermost workpiece can be held regardless of a stacking position of a workpiece group.

### Brief Description of Drawings

[Figure 1] Figure 1 is a schematic diagram showing a workpiece supply system according to a first embodiment of the present invention.
[Figure 2] Figure 2 is a schematic diagram showing a robotic hand of a workpiece supply robot according to the first embodiment.
[Figure 3] Figure 3 is a functional block diagram showing a control device according to the first embodiment.
[Figure 4] Figure 4 is a schematic diagram showing a rectangle approximation process for a workpiece according to the first embodiment.
[Figure 5] Figure 5 is a schematic diagram showing a rectangle approximation process for the workpiece and the robotic hand according to the first embodiment.
[Figure 6] Figure 6 is a schematic diagram showing a nearest neighbor portion specifying process for the workpiece according to the first embodiment.
[Figure 7] Figure 7 is a schematic diagram showing a pivot center of the workpiece according to the first embodiment.
[Figure 8] Figure 8 is a schematic diagram showing a process when there are a plurality of nearest neighbor portions of the workpiece according to the first embodiment.
[Figure 9] Figure 9 is a schematic diagram showing a process when there is an obstacle in a vicinity of the workpiece according to the first embodiment.
[Figure 10] Figure 10 is a flow chart showing an example of a workpiece supply method using the workpiece supply system of the first embodiment.
[Figure 11] Figure 11 is a schematic diagram showing a separating operation of an uppermost workpiece according to the first embodiment.
[Figure 12] Figure 12 is a schematic diagram showing the separating operation of the uppermost workpiece according to the first embodiment.
[Figure 13] Figure 13 is a schematic diagram showing the separating operation of the uppermost workpiece according to the first embodiment.
[Figure 14] Figure 14 is a schematic diagram showing a nearest neighbor portion specifying process for the workpiece according to a second embodiment.
[Figure 15] Figure 15 is a schematic diagram showing a pivot center of the workpiece according to the second embodiment.

### Description of Embodiments

The best embodiments for carrying-out the present invention will be described below with reference to the drawings. It should be noted that the following embodiments do not limit the invention according to each claim, and not all combinations of features described in the embodiments are essential for the solution of the invention.

### [Overall Configuration of Workpiece Supply System according to First Embodiment]

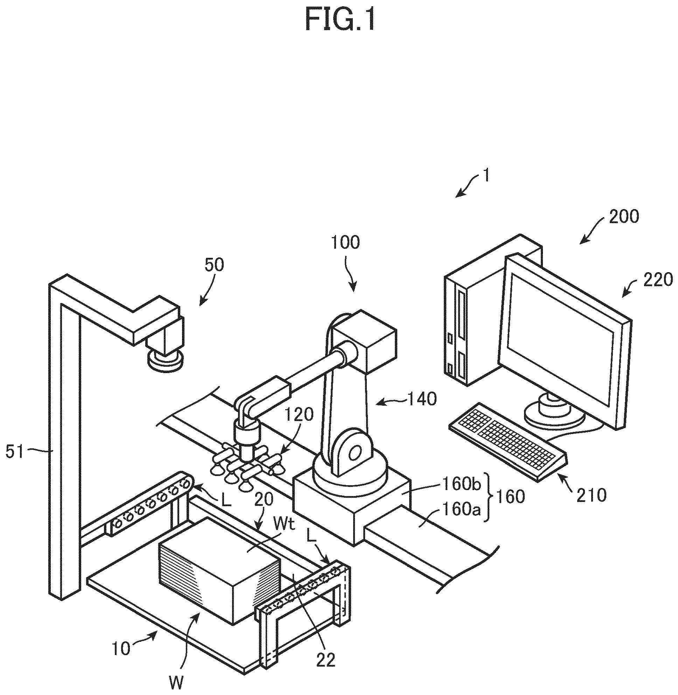

Figure 1 is a schematic diagram showing a workpiece supply system according to a first embodiment of the present invention.

As shown in Figure 1, a workpiece supply system 1 according to the first embodiment generally includes a workpiece supply robot 100 configured to be able to transport an uppermost workpiece Wt from a workpiece W group stacked on a workpiece mounting table 10. The workpiece supply robot 100 includes a robotic hand 120 that holds the uppermost workpiece Wt.

Further, the workpiece supply system 1 further includes a camera 50 for specifying the workpiece W group stacked on the workpiece mounting table 10, and a control device 200 capable of controlling the workpiece supply robot 100 and the camera 50. Furthermore, the workpiece supply system 1 according to the first embodiment may further include a processing machine such as a bending machine, and may constitute an automatic processing system for the workpiece W together with the processing machine.

### [Configuration of Workpiece Supply Robot]

The workpiece supply robot 100 is arranged between the workpiece mounting table 10 and a transport destination (for example, the processing machine or the like) of the workpiece W, and configured to hold the workpiece W on the workpiece mounting table 10 and to transport the workpiece W toward the transport destination such as the processing machine.

Specifically, as shown in Figure 1, the workpiece supply robot 100 includes a moving mechanism 160 for moving the workpiece supply robot 100, a robotic hand 120 capable of holding the workpiece W, and an arm part 140 for bringing the robotic hand 120 near to or away from the workpiece W.

The moving mechanism 160 is a so-called direct-acting mechanism that includes a rail part 160a that is laid on a floor surface, a base table 160b that is movable along the rail part 160a, and a base table driving means (not shown) that drives the base table 160b, and is configured to move the workpiece supply robot 100 on the floor surface based on a control signal from a robot control unit 230, which will be described later, of the control device 200. It should be noted that the moving mechanism 160 can employ various known configurations, and thus detailed description thereof will be omitted.

One end portion of the arm part 140 is connected to the base table 160b of the moving mechanism 160, and the other end thereof is connected to the robotic hand 120. The arm part 140 is configured to bring the robotic hand 120 near to or away from the workpiece W based on the control signal from the robot control unit 230 of the control device 200. In the first embodiment, the arm part 140 is an articulated arm including six control axes, and is configured to be able to execute not only transport of the workpiece W from the workpiece mounting table 10 but also transport (carrying-in) of the workpiece W to the processing machine or the like, assistance to processing (bending) of the workpiece W, and transport (carrying-out) of a product (a bent part) from the processing machine or the like. It should be noted that the arm part 140 can employ various known configurations, and thus detailed description thereof will be omitted. Further, the arm part 140 is not limited to the configuration of the articulated arm having the six control axes described above, and various known configurations can be arbitrarily employed.

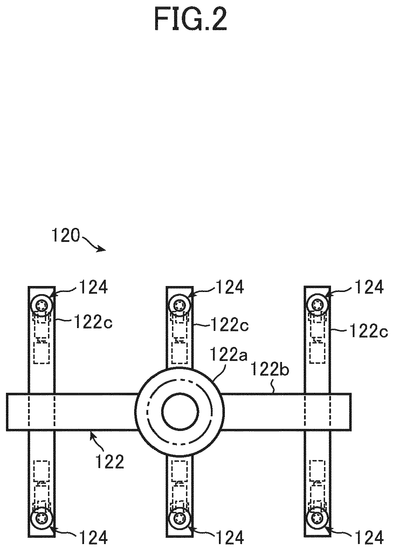

Figure 2 is a schematic diagram showing the robotic hand of the workpiece supply robot according to the first embodiment.

As shown in Figure 2, the robotic hand 120 includes a hand main body 122 detachably attached to a distal end of the arm part 140 and a plurality of suction parts 124 attached to the hand main body 122 and configured to be able to hold the workpiece W. The hand main body 122 includes a mounting part 122a detachably mounted on the distal end of the arm part 140, a first support bar 122b coupled to the mounting part 122a, a plurality of second support bars 122c provided to the first support bar 122b spaced apart in a longitudinal direction thereof. It should be noted that a shape of the hand main body 122 is not limited to an illustrated example, and can be arbitrarily changed in accordance with a shape and the like of the workpiece W.

The suction parts 124 are attached to both of end edge portions of each of the second support bars 122c, and are each connected via piping to an air suction source (not shown) for suctioning air. Each of the suction parts 124 includes, at a lower end portion thereof, a flat suction pad that can suction (can contact) a surface of the workpiece W, and is configured to suction the surface of the uppermost workpiece Wt from among the workpiece W group stacked on the workpiece mounting table 10 by a suction force of the air caused by the air suction source. It should be noted that the robotic hand 120 can employ various known configurations, and thus detailed description thereof will be omitted. Further, the robotic hand 120 is not limited to the suction method described above, and various known configurations can be arbitrarily employed.

### [Configuration of Camera]

One lens and one image sensor are provided to the camera 50, and as shown in Figure 1, the camera 50 is arranged via a supporting member such as a camera stand 51 or the like above the workpiece mounting table 10 so that photographing is possible with at least a whole or a part of the workpiece mounting table 10 being a photographed area. In the first embodiment, as shown in Figure 1, the camera 50 is arranged at a position that does not interfere with the workpiece supply robot 100, and is configured to photograph the workpiece W group stacked on the workpiece mounting table 10 from above.

The camera 50 is configured to supply photographed image data, which is photographed, to an image processing unit 250 of the control device 200, which will be described later. It should be noted that the camera 50 according to the first embodiment may be configured to directly output a digital signal (the photographed image data) from the camera 50 to the image processing unit 250, or may be configured to convert an analog signal (the photographed image signal), which is output from the camera 50, into the digital signal (the photographed image data) by an A/D converter (not shown) or the like so as to output the data to the image processing unit 250. Further, the camera 50 is configured to be interlockable with a lighting fixture L, which will be described later, so that the workpiece W group is irradiated with an illumination beam when the workpieces W group stacked on the workpiece mounting table 10 is photographed. According to such a configuration, there is an advantage that an edge of the workpieces W group is clarified, which makes it easier to specify the edge of the workpieces W group when an outer shape and a position of the workpieces W group are specified.

### [Configuration of Workpiece Mounting table]

As shown in Figure 1, in the workpiece mounting table 10, a magnet floater 20 is provided to an end portion on a side of the workpiece supply robot 100. When the workpiece W group is stacked on the workpiece mounting table 10 in a state in which an end surface of the workpiece W group is abutted against an abutting surface 22, the magnet floater 20 can lift, by a magnetic force of a magnet, the workpiece W on an upper side from among the workpiece W group.

Further, at a predetermined position at a vicinity of the workpiece mounting table 10, an end surface bar (not shown) and the lighting fixture L including a plurality of pieces of LEDs (Light-Emitting Diodes) capable of irradiating the stacked workpiece W group with the irradiation beam are provided. The workpiece supply system 1 according to the first embodiment is configured such that the lighting fixture L assists the camera 50 to specify the workpiece W. It should be noted that the workpiece mounting table 10, the magnet floater 20, and the lighting fixture L can arbitrarily employ various known configurations, and thus detailed description thereof will be omitted.

### [Configuration of Control Device]

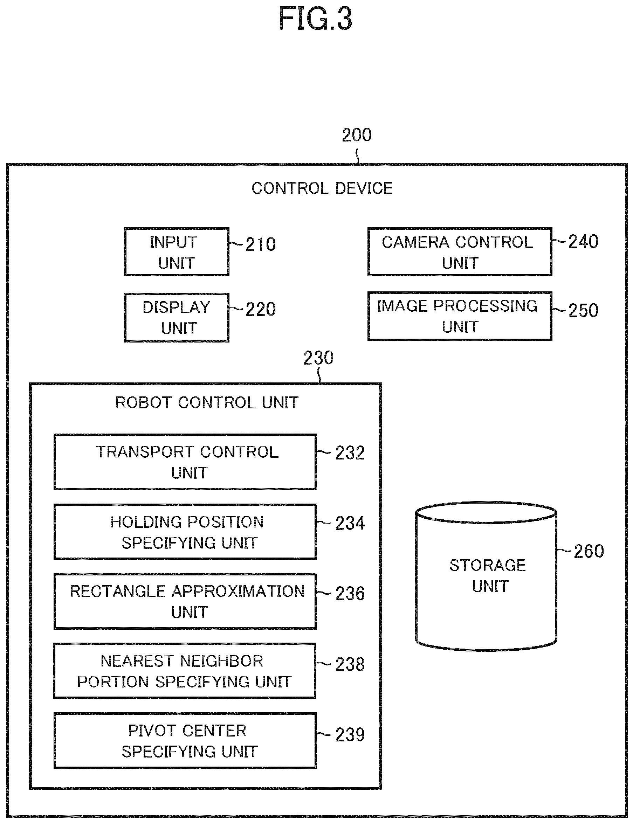

Figure 3 is a functional block diagram showing the control device according to the first embodiment.

As shown in Figure 3, the control device 200 includes an input unit 210, a display unit 220, the robot control unit 230, a camera control unit 240, the image processing unit 250, and a storage unit 260. Further, the control device 200 is connected to the workpiece supply robot 100 and the camera 50 by various known configurations.

The input unit 210 is composed of input devices such as a keyboard, a mouse, a push button switch, a tact switch, and a key lock switch, for example. An operation of the input unit 210 enables operations such as selection of an NC control program, which will be described later, of the storage unit 260 and selection of a pivot center LC, which will be described later, for example, in addition to a function of information input that is typically required in the workpiece supply system 1.

The display unit 220 includes a display as a display device, and displays a selection screen for selecting the NC control program, an image photographed by the camera 50, and a screen for confirming the pivot center LC, for example, in addition to a function of screen display that is typically required in the workpiece supply system 1. Further, the display unit 220 can be composed of a touch panel having a function of the input unit 210. When the display unit 220 is composed of the touch panel, a user can input, to the control device 200, various types of information such as the selection of the NC control program by operating the display unit 220, for example.

It should be noted that the configurations of the input unit 210 and the display unit 220 are not limited to the configurations described above, and they are not limited to these as long as the configurations have similar functions in lieu of the input unit 210 and the display unit 220 (for example, a display means, an input means, and the like that can be used from a remote place).

The camera control unit 240 is configured to control a photographing operation of the camera 50 based on a photography program stored in the storage unit 260. Further, the camera control unit 240 carries out control so that irradiation of the illumination beam from the lighting fixture L is linked with photographing of the camera 50 when the camera 50 photographs the workpiece W group.

The image processing unit 250 is configured to detect an edge of an outline of the workpiece W group stacked on the workpiece mounting table 10 based on the photographed image data supplied from the camera 50, to calculate position (x, y) information of the workpiece W group from the edge detection result, and to supply the calculated position information to the robot control unit 230. In other words, the image processing unit 250 is configured to be able to function as a workpiece specifying device that specifies a position of the uppermost workpiece Wt with high accuracy.

As shown in Figure 3, the robot control unit 230 includes a transport control unit 232, a holding position specifying unit 234, a rectangle approximation unit 236, a nearest neighbor portion specifying unit 238, and a pivot center specifying unit 239. The holding position specifying unit 234 carries out a holding position specifying process of specifying a holding position of the robotic hand 120 of the workpiece supply robot 100 with respect to the workpiece W. Specifically, the holding position specifying unit 234 extracts coordinate data of the workpiece W and the holding position of the robotic hand 120 with respect to the workpiece W from the NC control program of the storage unit 260, which will be described later, and specifies the holding position.

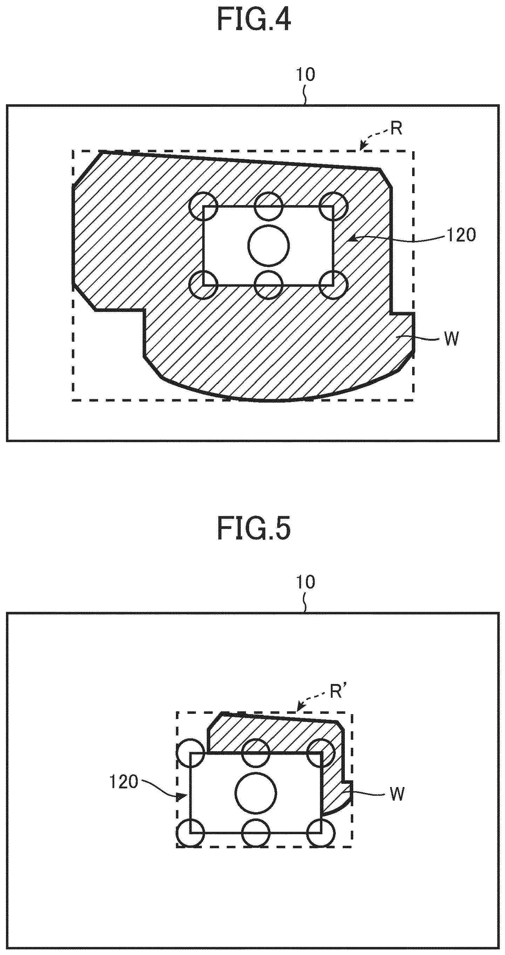

Figure 4 is a schematic diagram showing a rectangle approximation process for the workpiece according to the first embodiment.

As shown in Figure 4, the rectangle approximation unit 236 is configured to execute the rectangle approximation process of approximating the shape of the workpiece W so as to obtain a rectangle R that contains the workpiece W. Specifically, the rectangle approximation unit 236 extracts a contour of the workpiece W from the coordinate data of the workpiece W that is included in the NC control program of the storage unit 260, calculates a coordinate of a rectangle circumscribed to a point group from a set of coordinates of the point group that represents a contour line, and draw the rectangle R. An aspect ratio of the rectangle R varies depending on the shape of the workpiece W to which the rectangle approximation process is executed, and the rectangle R is the smallest rectangle that contains the workpiece W.

Figure 5 is a schematic diagram showing the rectangle approximation process for the workpiece and the robotic hand according to the first embodiment.

Further, as shown in Figure 5, when the holding position of the robotic hand 120 specified by the holding position specifying unit 234 indicates that the robotic hand 120 protrudes from the workpiece W, the rectangle approximation unit 236 executes the rectangle approximation process of approximating the shape of the workpiece to a rectangle R' containing the workpiece W and the robotic hand 120 in addition to the rectangle approximation process of approximating the shape of the workpiece W so as to obtain the rectangle R containing the workpiece W. With such a configuration, it is possible to prevent a portion of the robotic hand 120, which protrudes from the workpiece W, from getting into the workpiece mounting table 10 when the workpiece W is separated.

The nearest neighbor portion specifying unit 238 carries out the nearest neighbor portion specifying process of specifying a portion of the workpiece W nearest to the holding position of the robotic hand 120, which is specified in the holding position specifying process by the holding position specifying unit 234. The holding position of the robotic hand 120 is specifically an end portion of the suction pad of the suction part 124 of the robotic hand 120. Further, the portion of the workpiece W is specifically a side of the workpiece W.

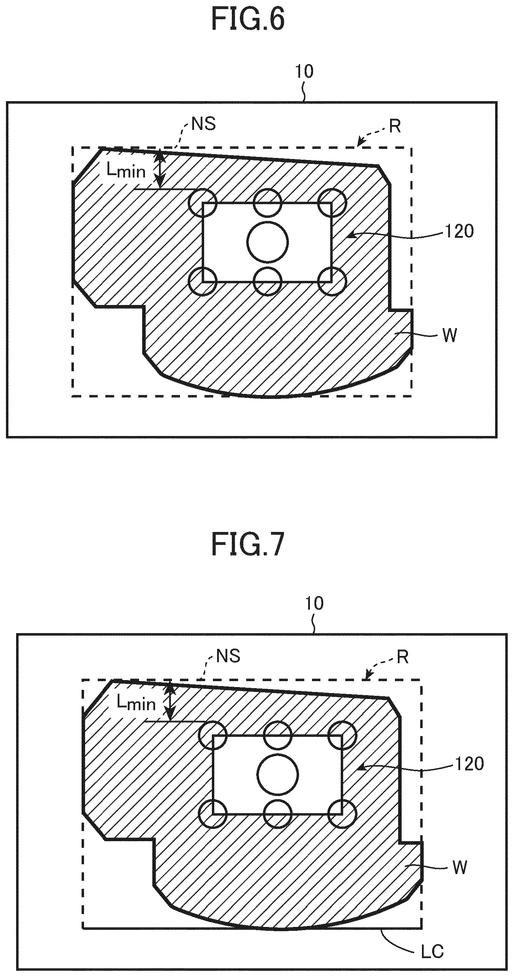

Figure 6 is a schematic diagram showing the nearest neighbor portion specifying process for the workpiece according to the first embodiment.

As shown in Figure 6, the nearest neighbor portion specifying process specifies a nearest neighbor side NS based on the rectangle R that is obtained through the approximation in the rectangle approximation process by the rectangle approximation unit 236. Specifically, the nearest neighbor portion specifying unit 238 calculates a distance between each of the four sides that form the rectangle R and the end portion of the suction pad of the suction part 124 of the robotic hand 120, which is nearest to the each side, and then specifies, as the nearest neighbor side NS, a side whose distance is the shortest distance Lₘᵢₙ. In the present specification, the distance between the each side of the rectangle R and the end portion of the suction pad of the suction part 124 is a distance along a direction orthogonal to the each side of the rectangle R. It should be noted that when the holding position of the robotic hand 120 specified by the holding position specifying unit 234 indicates that the robotic hand 120 protrudes from the workpiece W, the end portion of the suction pad of the suction part 124 protruding from the workpiece W is excluded from the nearest neighbor portion specifying process by the nearest neighbor portion specifying unit 238, and the nearest neighbor portion specifying process is carried out based on the end portion of the suction pad of the suction part 124 within the workpiece W.

Figure 7 is a schematic diagram showing the pivot center of the workpiece according to the first embodiment.

As shown in Figure 7, the pivot center specifying unit 239 carries out a pivot center specifying process of specifying a side opposed to the nearest neighbor portion NS that is specified, as the pivot center LC, in the nearest neighbor portion specifying process by the nearest neighbor portion specifying unit 238. Further, when the holding position of the robotic hand 120 specified by the holding position specifying unit 234 indicates that the robotic hand 120 protrudes from the workpiece W, a side of the rectangle R' opposed to the nearest neighbor portion NS, which is specified in the nearest neighbor portion specifying process by the nearest neighbor portion specifying unit 238, is specified as the pivot center LC.

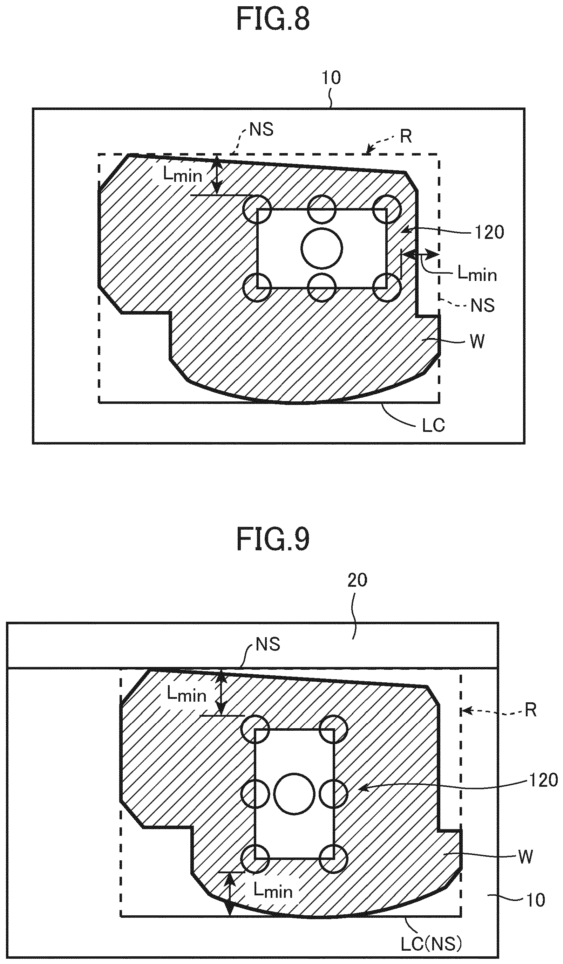

Figure 8 is a schematic diagram showing a process when there are a plurality of the nearest neighbor portions of the workpiece according to the first embodiment.

Figure 9 is a schematic diagram showing a process when there is an obstacle in a vicinity of the workpiece according to the first embodiment.

As shown in Figure 8, the pivot center specifying process by the pivot center specifying unit 239 specifies a side opposed to a longest nearest neighbor side NS as the pivot center LC when two or more nearest neighbor sides NS are specified in the nearest neighbor portion specifying process by the nearest neighbor portion specifying unit 238. Further, as shown in Figure 9, the pivot center specifying process specifies, as the pivot center LC, the side opposed to the longest nearest neighbor side NS with the obstacle (for example, the end surface bar, the magnet floater 20, and the like) in the vicinity when there are two or more longest nearest neighbor sides NS. The information of the obstacle in the vicinity is included, for example, in the NC control program of the storage unit 260, which will be described later, and is acquired as a priority longest nearest neighbor side specifying parameter when the two or more longest nearest neighbor sides NS are specified, but the information of the obstacle in the vicinity is not limited to this.

The transport control unit 232 is configured to enable CNC control (Computerized Numerical Control) of the workpiece supply robot 100, and carries out a robotic hand control process of separating the uppermost workpiece Wt from the workpiece W group with, as a center, the opposed side specified in the pivot center specifying process by the pivot center specifying unit 239.

Specifically, the transport control unit 232 is configured to control, when the workpiece W is transported (carried out) from the workpiece mounting table 10, the moving mechanism 160 and the arm part 140 based on the NC control program stored in the storage unit 260 so that the robotic hand 120 reaches the uppermost workpiece Wt from the workpiece W group stacked on the workpiece mounting table 10. Further, the transport control unit 232 is configured to control, when the robotic hand 120 reaches the uppermost workpiece Wt, the air suction source so that the uppermost workpiece Wt is held by the robotic hand 120 and to control the moving mechanism 160 and the arm part 140 so that the uppermost workpiece Wt held is lifted, while being turned around the pivot center LC, so as to be transported to a transport destination such as the processing machine.

Furthermore, the robotic hand control process by the transport control unit 232 is configured to hold the uppermost workpiece Wt for a predetermined standby time (for example, 2 seconds) in a state in which the uppermost workpiece Wt is turned around the opposed portion of the uppermost workpiece Wt. The standby time is not limited to the example described above, and various arbitrary times can be employed depending on a size of the workpiece W and the like.

The robot control unit 230 including the above configuration is configured such that the user can select whether or not to carry out a separating operation of turning the uppermost workpiece Wt around the pivot center LC. Further, the robot control unit 230 is configured such that the user can change, from an initial setting value, the standby time for which the uppermost workpiece Wt is held in the state of being turned. Furthermore, the robot control unit 230 is configured such that the user can change, from an initial setting value, a turning angle at which the uppermost workpiece Wt is turned. Further, the robot control unit 230 is configured to display, on the display unit 220, a manual adjustment screen for the user to confirm the setting items described above and execute a setting change.

The storage unit 260 stores the NC control program for causing the workpiece supply robot 100 to execute the transport (carrying-out) of the workpiece W from the workpiece mounting table 10, the transport (carrying-in) of the workpiece W to the processing machine or the like, the assistance to the processing (the bending) of the workpiece W, and the transport (carrying-out) of the product (the bent part) from the processing machine or the like. Further, the storage unit 260 stores a photographing program for controlling the camera 50, an image processing program, and the like.

Furthermore, the storage unit 260 stores a workpiece supply program for causing the robot control unit 230 to execute the control of the workpiece supply robot 100. The workpiece supply program is configured to cause the robot control unit 230 to execute the holding position specifying process of specifying the holding position of the robotic hand 120 with respect to the workpiece W, the nearest neighbor portion specifying process of specifying the portion of the workpiece W nearest to the holding position of the robotic hand 120 that is specified by the holding position specifying process, the pivot center specifying process of specifying, as the pivot center LC, the opposed portion opposed to the nearest neighbor portion NS that is specified by the nearest neighbor portion specifying process, and the robotic hand control process of separating the uppermost workpiece Wt from the workpiece W group with the opposed portion specified by the pivot center specifying process as the center.

The control device 200 including the above configuration is configured to display, on the display unit 220, the manual adjustment screen for the user to be able to select whether or not to carry out the separating operation of the uppermost workpiece Wt. In addition, the control device 200 further displays, on the manual adjustment screen, the standby time for which the uppermost workpiece Wt is held in the state in which the workpiece is turned around the opposed portion of the uppermost workpiece Wt, and the turning angle at which the uppermost workpiece Wt is turned. The control device 200 including such a configuration is configured to enable the user to manually change whether or not to carry out the separating operation, the standby time, and the turning angle from an initial setting state by operating the input unit 210 or the display unit 220, which is composed of a touch panel, of the control device 200.

It should be noted that the pivot center LC specified in the pivot center specifying process by the pivot center specifying unit 239 is configured to be able to be manually changed. Specifically, together with an image of the uppermost workpiece Wt photographed by the camera 50, the rectangles R and R' approximated to the uppermost workpiece Wt are displayed on the manual adjustment screen of the display unit 220. The pivot center LC specified by the pivot center specifying unit 239 is highlighted on the rectangles R and R' in a color different from colors of other sides of the uppermost workpiece Wt. Further, the other sides of the uppermost workpiece Wt that can be selected by the user as the pivot center LC are also clearly indicated on the rectangles R and R' so that the user can identify them. By operating the input unit 210 or the display unit 220, which is composed of the touch panel, of the control device 200, the user can select one of the other sides of the uppermost workpiece Wt as the pivot center LC.

Further, the control device 200 may be configured to specify a parameter to be changed for optimizing an effectiveness of the separating operation and an effect of the separating operation based on the shape and a size of the workpiece W, a shape and a size of the robotic hand 120, and the holding position of the robotic hand 120 so as to display the parameter on the display unit 220.

### [Workpiece Supply Method according to First Embodiment]

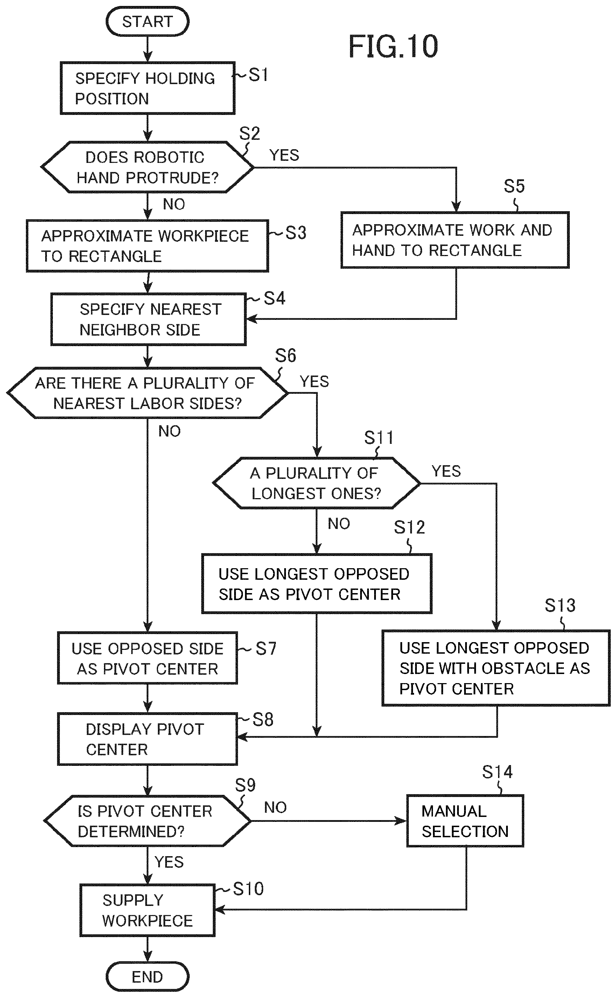

Figure 10 is a flow chart showing an example of a workpiece supply method using the workpiece supply system of the first embodiment.

A series of the workpiece supply method of the workpiece supply system 1 described above will be described with reference to Figure 10. The series of the workpiece supply method is executed while the workpiece W is being loaded. Specifically, first, the robot control unit 230 of the control device 200 reads, from the storage unit 260, the NC control program for the workpiece supply robot 100 to transport the workpiece W. The holding position specifying unit 234 of the robot control unit 230 of the control device 200 executes, from the read NC control program, the holding position specifying process of specifying the holding position of the robotic hand 120 of the workpiece supply robot 100 with respect to the uppermost workpiece Wt of the workpiece W group (S1 in Figure 10: a holding position specifying process step).

After the holding position specifying process is executed, the rectangle approximation unit 236 of the robot control unit 230 of the control device 200 executes the rectangle approximation process. First, the rectangle approximation unit 236 executes a different rectangle approximation process in accordance with the holding position of the robotic hand 120 of the workpiece supply robot 100 with respect to the uppermost workpiece Wt, which is specified by the holding position specifying process. Specifically, if the robotic hand 120 does not protrude from the uppermost workpiece Wt (NO in S2 in Figure 10), the rectangle approximation unit 236 executes the rectangle approximation process of approximating the shape of the uppermost workpiece Wt to the rectangle R containing the uppermost workpiece Wt (S3 in Figure 10). On the other hand, if the robotic hand 120 protrudes from the uppermost workpiece Wt (YES in S2 in Figure 10), the rectangle approximation unit 236 further executes the rectangle approximation process of approximating the shape of the uppermost workpiece Wt to the rectangle R' containing the uppermost workpiece Wt and the robotic hand 120 (S5 in Figure 10).

After the rectangle approximation process is executed, the nearest neighbor portion specifying unit 238 of the robot control unit 230 of the control device 200 executes the nearest neighbor portion specifying process based on the rectangle R that is obtained through the approximation in the rectangle approximation process by the rectangle approximation unit 236. Specifically, the nearest neighbor portion specifying unit 238 executes the nearest neighbor portion specifying process of specifying, as the nearest neighbor side NS, the side of the uppermost workpiece Wt (the rectangle R) nearest to the end portion of the suction pad of the suction part 124 of the robotic hand 120 of the workpiece supply robot 100 that is specified in the holding position specifying process by the holding position specifying unit 234 (S4 in Figure 10: a nearest neighbor portion specifying process step).

After the nearest neighbor portion specifying process is executed, the pivot center specifying unit 239 of the robot control unit 230 of the control device 200 executes the following process in accordance with the number of the nearest neighbor side NS specified in the nearest neighbor portion specifying process by the nearest neighbor portion specifying unit 238. In other words, if the number of the nearest neighbor side NS specified by the nearest neighbor portion specifying unit 238 is one (NO in S6 in Figure 10), the pivot center specifying unit 239 executes the pivot center specifying process of specifying the side opposed to the nearest neighbor side NS as the pivot center LC (S7 in Figure 10: a pivot center specifying process step). If there are a plurality of the nearest neighbor sides NS specified by the nearest neighbor portion specifying unit 238 (YES in S6 in Figure 10) and if the number of the longest nearest neighbor side NS is one (NO in S11 in Figure 10), the pivot center specifying unit 239 specifies the side opposed to the longest nearest neighbor side NS as the pivot center LC (S12 in Figure 10).

On the other hand, if there are a plurality of the nearest neighbor sides NS specified by the nearest neighbor portion specifying unit 238 of the robot control unit 230 of the control device 200 (YES in S6 in Figure 10) and if there are a plurality of the longest nearest neighbor sides NS (YES in S11 in Figure 10), the pivot center specifying unit 239 specifies, as the pivot center LC, the side opposed to the longest nearest neighbor side NS with the obstacle (the end surface bar or the magnet floater 20) in the vicinity of the uppermost workpiece Wt (S13 in Figure 10).

After the pivot center LC is specified, the workpiece W group is mounted on the mounting table 10, and the workpiece group that is mounted is photographed by the camera 50. After that, the control device 200 corrects the NC control program based on the photographed image data that is supplied from the camera 50. Simultaneously with or after the correction of the NC control program, the control device 200 displays, on the display unit 220, the pivot center LC specified by the pivot center specifying unit 239 of the robot control unit 230 (S8 in Figure 10). Specifically, the pivot center LC specified by the pivot center specifying unit 239 is highlighted on the rectangles R and R' approximating the uppermost workpiece Wt in the color different from the colors of the other sides of the uppermost workpiece Wt. Further, the other sides of the uppermost workpiece Wt that can be selected by the user as the pivot center LC are also clearly indicated so that the user can identify them.

Further, on the display unit 220, the control device 200 displays the manual adjustment screen for the user to be able to manually change, from the initial setting state, whether or not to carry out the separating operation of the uppermost workpiece Wt, the standby time for which the uppermost workpiece Wt is held in the state of being turned, and the turning angle at which the uppermost workpiece Wt is turned.

The user confirms the pivot center LC displayed on the display unit 220 of the control device 200. If the user desires to select the pivot center LC that is different from the pivot center LC specified by the pivot center specifying unit 239 (NO in S9 in Figure 10), the user can select one of the other sides of the uppermost workpiece Wt as the pivot center LC by operating the input unit 210 of the control device 200 or the display unit 220, which is composed of the touch panel, of the control device 200 (S14 in Figure 10).

When the user does not manually select the pivot center LC (YES in S9 in Figure 10), the transport control unit 232 of the robot control unit 230 of the control device 200 executes the robotic hand control process of separating the uppermost workpiece Wt from the workpiece W group with the side specified by the pivot center specifying unit 239 as the pivot center LC (a robotic hand control process step). On the other hand, when the user manually selects the pivot center LC, the transport control unit 232 executes the robotic hand control process of separating the uppermost workpiece Wt from the workpiece W group with the side selected by the user as the pivot center LC. The workpiece supply robot 100 supplies the uppermost workpiece Wt from the workpiece mounting table 10 to the processing machine in accordance with the control of the transport control unit 232 (S10 in Figure 10).

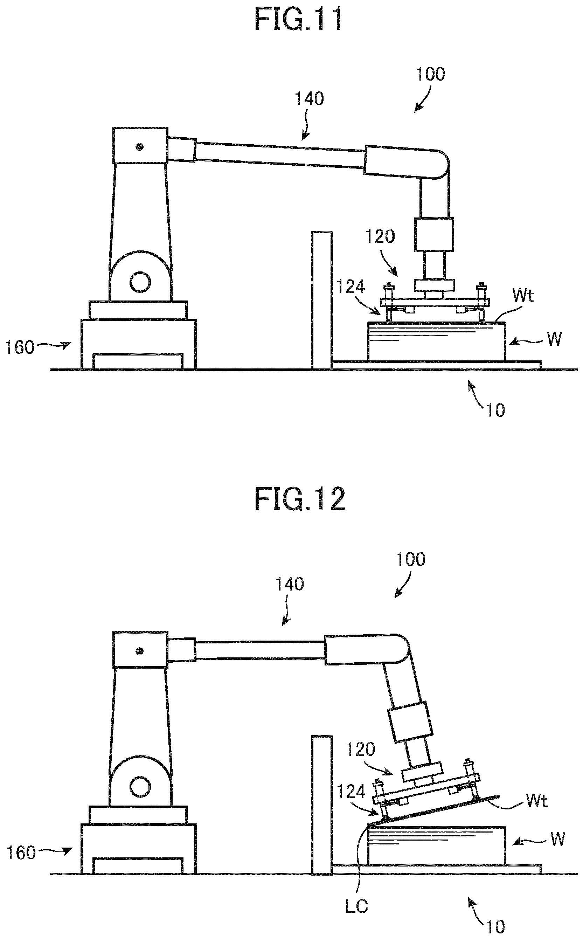

Figures 11 to 13 are schematic diagrams showing the separating operation of the uppermost workpiece according to the first embodiment.

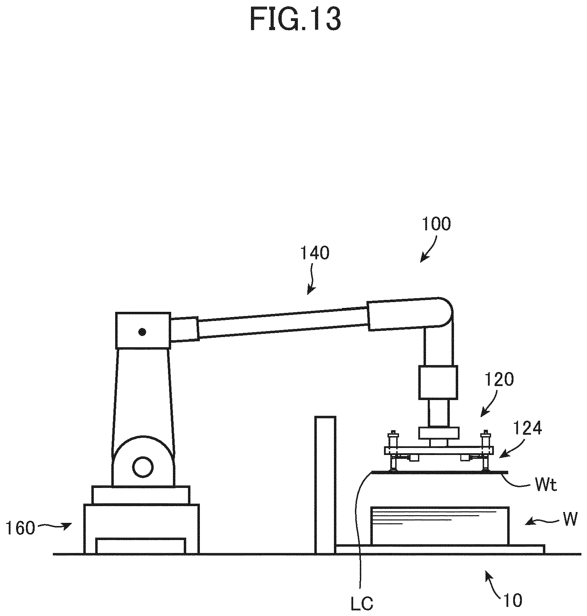

As shown in Figure 11, in the workpiece supply robot 100, the robotic hand 120 is moved to the holding position of the uppermost workpiece Wt when the arm part 140 and the moving mechanism 160 are operated. The robotic hand 120 holds the uppermost workpiece Wt by causing the suction pad of the suction part 124 to suction the surface of the uppermost workpiece Wt with the suction force caused by the air suction source. As shown in Figure 12, the workpiece supply robot 100 that holds the uppermost workpiece Wt separates the uppermost workpiece Wt from the workpiece W group with, as the pivot center LC, the side of the uppermost workpiece Wt specified by the pivot center specifying unit 239 of the robot control unit 230 of the control device 200 or the side of the uppermost workpiece Wt manually selected by the user. The workpiece supply robot 100 holds the uppermost workpiece Wt for the predetermined standby time in a posture in Figure 12, in other words, in the state in which the uppermost workpiece Wt is turned around the opposed portion of the uppermost workpiece Wt. After the predetermined standby time has passed, as shown in Figure 13, the workpiece supply robot 100 separates the side of the uppermost workpiece Wt, which is specified or selected as the pivot center LC, from the workpiece W group, and holds the uppermost workpiece Wt so as to be substantially horizontal to the workpiece mounting table 10. After that, the workpiece supply robot 100 supplies the uppermost workpiece Wt to the processing machine. The series of the operations of the workpiece supply method by the workpiece supply system 1 according to the first embodiment are executed by the above steps.

### [Advantages of Workpiece Supply System according to First Embodiment]

As described above, the workpiece supply system 1 according to the first embodiment includes the workpiece supply robot 100 configured to be able to transport the uppermost workpiece Wt from the workpiece W group stacked on the workpiece mounting table 10, and the robot control unit 230. The workpiece supply robot 100 includes the robotic hand 120 for holding the uppermost workpiece Wt, and the robot control unit 230 carries out the holding position specifying process of specifying the holding position of the robotic hand 120 with respect to the workpiece W, the nearest neighbor portion specifying process of specifying the portion (the side) of the workpiece W nearest to the holding position of the robotic hand 120 that is specified by the holding position specifying process, the pivot center specifying process of specifying, as the pivot center LC, the opposed portion (side) opposed to the nearest neighbor portion (the nearest neighbor side NS) that is specified by the nearest neighbor portion specifying process, and the robotic hand control process of separating the uppermost workpiece Wt from the workpiece W group around the opposed portion specified by the pivot center specifying process.

Then, with such a configuration, in the workpiece supply system 1 according to the first embodiment, the pivot center LC is selected in accordance with the holding position of the robotic hand 120 with respect to the workpiece W, and the uppermost workpiece Wt is separated from the workpiece W group by being obliquely lifted. Therefore, there is an advantage that only the uppermost workpiece Wt can be held regardless of a mounting place of the workpieces W on the workpiece mounting table 10 and the shape of the workpieces W. Furthermore, the present inventors found a new knowledge that the nearer the end portion of the suction pad of the suction part 124 of the robotic hand 120 is to an end portion of the workpiece W, the higher a success rate of picking up only the single uppermost workpiece Wt from the workpiece W group is. In the workpiece supply system 1 according to the first embodiment, since the opposed portion (side) opposed to the nearest neighbor portion (the nearest neighbor side NS) is used as the pivot center LC, the pivot center LC is away from the holding position of the robotic hand 120. In other words, since the end portion of the suction pad is near to the end portion (the nearest neighbor side NS) of the workpiece W, there is an advantage that only the uppermost workpiece Wt can be separated more reliably from the workpiece W group.

Further, in the workpiece supply system 1 according to the first embodiment, the nearest neighbor portion and the opposed portion of the workpiece W are the sides of the workpiece W. With such a configuration, there is an advantage that the workpiece W can always be lifted at the turning angle according to setting.

Furthermore, in the workpiece supply system 1 according to the first embodiment, the pivot center specifying control process separates the uppermost workpiece Wt from the workpiece W group with, as the pivot center LC, the opposed portion (side) opposed to the longest nearest neighbor portion (nearest neighbor side NS) if the two or more nearest neighbor portions (nearest neighbor sides NS) are specified in the nearest neighbor portion specifying process. With such a configuration, compared to the case in which the opposed portion (side) opposed to the other specified nearest neighbor portion (nearest neighbor side NS) is used as the pivot center LC, there is an advantage that only the uppermost workpiece Wt can be separated more reliably from the workpiece W group.

Further, in the workpiece supply system 1 according to the first embodiment, if there are the two or more longest nearest neighbor portions (nearest neighbor sides NS), the pivot center specifying process separates the uppermost workpiece Wt from the workpiece W group with, as the pivot center LC, the opposed portion (side) opposed to the longest nearest neighbor portion (nearest neighbor side NS) with the obstacle in the vicinity. With such a configuration, there is an advantage that the robotic hand 120 of the workpiece supply robot 100 can be prevented from interfering with the obstacle when the uppermost workpiece Wt is separated from the workpiece W group.

Furthermore, in the workpiece supply system 1 according to the first embodiment, the robot control unit 230 is configured to further execute the rectangle approximation process of approximating the shape of the workpiece W so as to obtain the rectangle R containing the workpiece W, and the nearest neighbor portion specifying process specifies the nearest neighbor portion based on the rectangle R that is obtained through the approximation by the rectangle approximation process. With such a configuration, even when the workpiece W has a complicated shape, there is an advantage that the appropriate nearest neighbor portion (nearest neighbor side NS) and eventually the pivot center LC can be specified by simplifying the shape with the rectangle approximation.

Further, in the workpiece supply system 1 according to the first embodiment, the robotic hand control process is configured to hold the uppermost workpiece Wt for the predetermined standby time in the state in which the uppermost workpiece Wt is turned around the opposed portion of the uppermost workpiece Wt. With such a configuration, even when the workpiece W directly below sticks to the uppermost workpiece Wt, there is an advantage that only the uppermost workpiece Wt can be separated from the workpiece W group as the workpiece W directly below is separated from the uppermost workpiece Wt due to its own weight.

### [Overall Configuration of Workpiece Supply System according to Second Embodiment]

Next, a workpiece supply system 1' according to a second embodiment will be described. It should be noted that in the second embodiment, a part serving the same function as that in the first embodiment will be denoted by a same reference sign, and redundant description thereof will be omitted.

In the workpiece supply system 1' according to the second embodiment, the nearest neighbor portion specifying unit 238 carries out the nearest neighbor portion specifying process of specifying the portion of the workpiece W nearest to the holding position of the robotic hand 120, which is specified in the holding position specifying process by the holding position specifying unit 234. The holding position of the robotic hand 120 is specifically the end portion of the suction pad of the suction part 124 of the robotic hand 120. Further, the portion of the workpiece W is specifically a corner of the workpiece W.

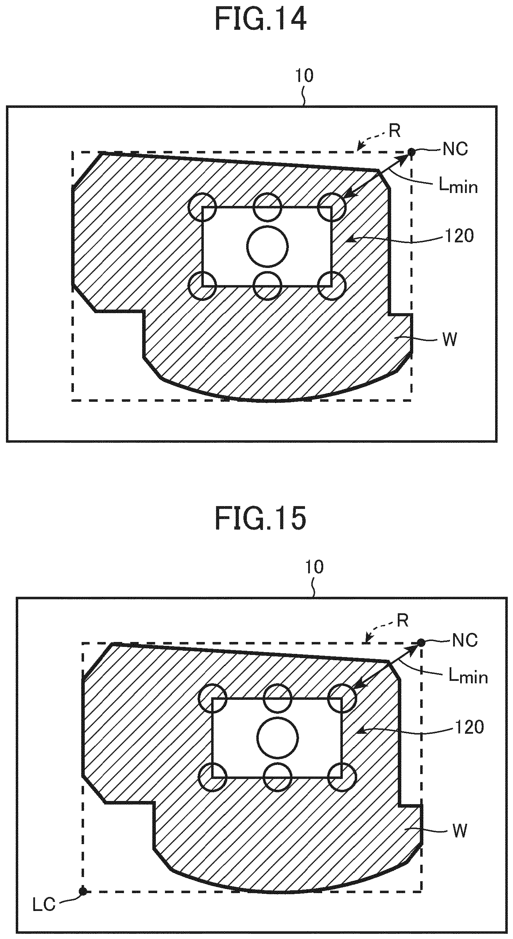

Figure 14 is a schematic diagram showing the nearest neighbor portion specifying process for the workpiece according to the second embodiment.

As shown in Figure 14, the nearest neighbor portion specifying process specifies a nearest neighbor corner NC based on the rectangle R that is obtained through the approximation in the rectangle approximation process by the rectangle approximation unit 236. Specifically, the nearest neighbor portion specifying unit 238 calculates a distance between each of the four corners that form the rectangle R and the end portion of the suction pad of the suction part 124 of the robotic hand 120, which is nearest to the each corner, and then specifies, as the nearest neighbor corner NC, a corner whose distance is the shortest distance Lₘᵢₙ.

Figure 15 is a schematic diagram showing the pivot center of the workpiece according to the second embodiment.

As shown in Figure 15, the transport control unit 232 carries out the robotic hand control process of separating the uppermost workpiece Wt from the workpiece W group with, as the pivot center LC, a corner opposed to the nearest corner NC specified in the nearest neighbor portion specifying process by the nearest neighbor portion specifying unit 238.

The robotic hand control process by the transport control unit 232 is configured to hold the uppermost workpiece Wt for the predetermined standby time (for example, 2 seconds or the like) in a state in which the nearest neighbor corner NC of the uppermost workpiece Wt is separated from the workpiece W group and the corner opposed to the nearest neighbor corner NC is not separated from the workpiece W group. The standby time is not limited to the example described above, and various arbitrary times can be employed depending on the size of the workpiece W and the like.

### [Advantages of Workpiece Supply System according to Second Embodiment]

As described above, in the workpiece supply system 1' according to the second embodiment, as in the first embodiment, the pivot center LC is selected in accordance with the holding position of the robotic hand 120 and the uppermost workpiece Wt is separated from the workpiece W group. Therefore, there is an advantage that only the uppermost workpiece Wt can be held regardless of a stacking position of the workpiece W group.

Furthermore, in the workpiece supply system 1 according to the second embodiment, the nearest neighbor portion and the opposed portion of the workpiece W are the corners of the workpiece W. With such a configuration, there is an advantage that even when an approximation line and the actual workpiece are far from each other, it can be solved by aligning the corners.

Further, as in the first embodiment, in the workpiece supply system 1' according to the second embodiment, the robot control unit 230 is configured to further execute the rectangle approximation process of approximating the shape of the workpiece W to the rectangle containing the workpiece, and the nearest neighbor portion specifying process is configured to specify the nearest neighbor portion (the nearest neighbor corner NC) based on the rectangle R that is obtained through the approximation by the rectangle approximation process. As a result, as in the first embodiment, in the workpiece supply system 1', even when the workpiece W has the complicated shape, there is an advantage that the appropriate pivot center LC can be specified by simplifying the shape.

Further, as in the first embodiment, in the workpiece supply system 1' according to the second embodiment, the robotic hand control process is configured to hold the uppermost workpiece Wt for the predetermined standby time in the state in which the nearest neighbor portion (the nearest neighbor corner NC) of the uppermost workpiece Wt is separated from the workpiece W and the opposed portion (corner) opposed to the nearest neighbor portion (the nearest neighbor corner NC) is not separated from the workpiece W group. As a result, as in the first embodiment, in the workpiece supply system 1', even when the workpiece W below the uppermost workpiece Wt sticks to the uppermost workpiece Wt, there is the advantage that only the uppermost workpiece Wt can be separated from the workpiece W group as the workpiece W is separated from the uppermost workpiece Wt due to its own weight.

### [Modified Examples]

Although the preferred embodiments of the present invention have been described above, the technical scope of the present invention is not limited to the scopes described in the first and second embodiments. Various modifications or improvements can be added to the embodiments described above.

For example, in the first embodiment described above, the nearest neighbor portion and the opposed portion of the workpiece W are described as the ones that are the sides of the workpiece W, and in the second embodiment described above, the nearest neighbor portion and the opposed portion of the workpiece W are described as the ones that are corners of the workpiece W. However, the present invention is not limited to this. For example, the nearest neighbor portion and the opposed portion of the workpiece W may be arbitrary portions other than the sides or the corners of the workpiece W.

In the first embodiment described above, the pivot center specifying process has been described as the one that separates the uppermost workpiece Wt from the workpiece W group with, as the pivot center LC, the opposed portion (side) opposed to the longest nearest neighbor portion (nearest neighbor side NS) if the two or more nearest neighbor portions (nearest neighbor sides NS) are specified in the nearest neighbor portion specifying process, but the present invention is not limited to this. In the robotic hand control process, the uppermost workpiece Wt may be separated from the workpiece W group with, as the pivot center LC, the opposed portion (side) opposed to the other nearest neighbor portion (nearest neighbor side NS).

In the first embodiment described above, the pivot center specifying process has been described as the one that separates the uppermost workpiece Wt from the workpiece W group with, as the pivot center LC, the opposed portion (side) opposed to the longest nearest neighbor portion (nearest neighbor side NS) with the obstacle in the vicinity if there are the two or more longest nearest neighbor portions (nearest neighbor sides NS), but the present invention is not limited to this. In the robotic hand control process, the uppermost workpiece Wt may be separated from the workpiece W group with, as the pivot center LC, the opposed portion (side) opposed to the other nearest neighbor portion (nearest neighbor side NS).

In the first and second embodiments described above, the robot control unit 230 has been described as the one configured to further execute the rectangle approximation process of approximating the shape of the workpiece W so as to obtain the rectangle R containing the workpiece W, and the nearest neighbor portion specifying process has been described as the one that specifies the nearest neighbor portion based on the rectangle R obtained through the approximation by the rectangle approximation process, but the present invention is not limited to this. The robot control unit 230 may carry out the nearest neighbor portion specifying process based on the shape of the workpiece W without carrying out the rectangle approximation process.

In the first and second embodiments described above, the robotic hand control process has been described as the one configured to hold the uppermost workpiece Wt for the predetermined standby time in the state in which the uppermost workpiece Wt is turned around the opposed portion of the uppermost workpiece Wt, but the present invention is not limited to this. In the robotic hand control process, the opposed portion (side, corner) of the uppermost workpiece Wt may be separated from the workpiece W group immediately from the state described above.

In the first and second embodiments described above, the holding position of the robotic hand 120 has been described as the one that is the end portion of the suction pad of the suction part 124 of the robotic hand 120, but the present invention is not limited to this. A center portion of the suction pad of the suction part 124 or an end portion of the hand main body 122 of the robotic hand 120 may be used.

In the workpiece supply methods of the first and second embodiments described above, it has been described that the workpiece W group is mounted on the mounting table 10 after the pivot center LC is specified, but the present invention is not limited to this. The workpieces W group may be mounted on the mounting table 10 before the specification or during the specification of the pivot center LC.

### Reference Signs List

- 1, 1': workpiece supply system
- 10: workpiece mounting table
- 20: magnet floater
- 22: abutting surface
- 50: camera
- 51: camera stand
- 100: workpiece supply robot
- 120: robotic hand
- 122: hand main body
- 122a: mounting part
- 122b: first support bar
- 122c: second support bar
- 124: suction part
- 140: arm part
- 160: moving mechanism
- 160a: rail part
- 160b: base table
- 200: control device
- 210: input unit
- 220: display unit
- 230: robot control unit
- 232: transport control unit
- 234: holding position specifying unit
- 236: rectangle approximation unit
- 238: nearest neighbor portion specifying unit
- 239: pivot center specifying unit
- 240: camera control unit
- 250: image processing unit
- 260: storage unit
- L: lighting fixture
- LC: pivot center
- Lₘᵢₙ: shortest distance
- NC: nearest neighbor corner (nearest neighbor portion)
- NS: nearest neighbor side (nearest neighbor portion)
- R, R': rectangle
- W: workpiece
- Wt: uppermost workpiece

## Claims

1. A workpiece supply system (1, 1') comprising:
a workpiece supply robot (100) configured to transport an uppermost workpiece (Wt) from a workpiece group stacked on a workpiece mounting table (10); and
a robot control unit (230),
wherein
the workpiece supply robot (100) includes a robotic hand (120) configured to hold the uppermost workpiece (Wt),
the robot control unit (230) is configured to execute:
a holding position specifying process of specifying a holding position of the robotic hand (120) with respect to the uppermost workpiece (Wt);
a rectangle approximation process of approximating a shape of the uppermost workpiece (Wt) so as to obtain a rectangle that contains the uppermost workpiece (Wt);
a nearest neighbor portion specifying process of specifying a side nearest to the holding position of the robotic hand (120) specified by the holding position specifying process as a nearest neighbor portion among sides of the rectangle, or a corner nearest to the holding position of the robotic hand (120) specified by the holding position specifying process as a nearest neighbor portion among corners of the rectangle, the rectangle being obtained through approximation in the rectangle approximation process;
a pivot center specifying process of specifying, as a pivot center (LC), an opposed portion opposed to the nearest neighbor portion specified by the nearest neighbor portion specifying process; and
a robotic hand control process of controlling the robotic hand (120) so that the held uppermost workpiece (Wt) is lifted, while being turned around the opposed portion specified by
**characterized in that** the pivot center specifying process,
the nearest neighbor portion specifying process calculates distances between the four sides forming the rectangle and end portions of suction pads of suction parts of the robotic hand (120) nearest to the respective sides, and specifies the side having the shortest distance as the nearest neighbor portion, or calculates distances between the four corners forming the rectangle and the end portions of suction pads of suction parts of the robotic hand (120) nearest to the respective corners, and specifies the corner having the shortest distance as the nearest neighbor portion,
the opposed portion is a side of the rectangle opposed to the nearest neighbor portion when the nearest neighbor portion is a side of the rectangle, or a corner of the rectangle opposed to the nearest neighbor portion when the nearest neighbor portion is a corner of the rectangle, and
the robotic hand control process controls the robotic hand (120) so as to hold the uppermost workpiece (Wt) for a predetermined standby time in a state in which the uppermost workpiece (Wt) is turned around the opposed portion.

2. The workpiece supply system (1, 1') according to claim 1, wherein the pivot center specifying process specifies, as the pivot center (LC), the side opposed to a longest nearest neighbor side if two or more nearest neighbor sides are specified in the nearest neighbor portion specifying process.

3. The workpiece supply system (1, 1') according to claim 2, wherein the pivot center specifying process specifies, as the pivot center (LC), the side opposed to the longest nearest neighbor side with an obstacle in a vicinity if there are two or more longest nearest neighbor sides.

4. A workpiece supply method comprising:
a holding position specifying process of specifying a holding position of a robotic hand (120) with respect to an uppermost workpiece (Wt) in a workpiece group stacked on a workpiece mounting table (10);
a rectangle approximation process of approximating a shape of the uppermost workpiece (Wt) so as to obtain a rectangle that contains the uppermost workpiece (Wt);
a nearest neighbor portion specifying process of specifying a side nearest to the holding position of the robotic hand (120) specified by the holding position specifying process as a nearest neighbor portion among sides of the rectangle, or a corner nearest to the holding position of the robotic hand (120) specified by the holding position specifying process as a nearest neighbor portion, among corners of the rectangle, the rectangle being obtained through approximation in the rectangle approximation process;
a pivot center specifying process of specifying, as a pivot center (LC), an opposed portion opposed to the nearest neighbor portion specified by the nearest neighbor portion specifying process; and
a robotic hand control process of controlling the robotic hand (120) so that the held uppermost workpiece (Wt) is lifted, while being turned around the opposed portion specified by the pivot center specifying process, wherein
the robotic hand (120) is configured to hold the uppermost workpiece (Wt),
**characterized in that**
the nearest neighbor portion specifying process calculates distances between the four sides forming the rectangle and end portions of suction pads of suction parts of the robotic hand (120) nearest to the respective sides, and specifies the side having the shortest distance as the nearest neighbor portion, or calculates distances between the four corners forming the rectangle and the end portions of suction pads of suction parts of the robotic hand (120) nearest to the respective corners, and specifies the corner having the shortest distance as the nearest neighbor portion,
the opposed portion is a side of the rectangle opposed to the nearest neighbor portion when the nearest neighbor portion is a side of the rectangle, or a corner of the rectangle opposed to the nearest neighbor portion when the nearest neighbor portion is a corner of the rectangle, and
the robotic hand control process controls the robotic hand (120) so as to hold the uppermost workpiece (Wt) for a predetermined standby time in a state in which the uppermost workpiece (Wt) is turned around the opposed portion.

5. A workpiece supply program comprising instructions which, when the program is executed by a robot control unit (230), cause the robot control unit (230) to execute:
a holding position specifying process of specifying a holding position of a robotic hand (120) with respect to an uppermost workpiece (Wt) in a workpiece group stacked on a workpiece mounting table (10);
a rectangle approximation process of approximating a shape of the uppermost workpiece (Wt) so as to obtain a rectangle that contains the uppermost workpiece (Wt);
a nearest neighbor portion specifying process of specifying a side nearest to the holding position of the robotic hand (120) specified by the holding position specifying process as a nearest neighbor portion among sides of the rectangle, or a corner nearest to the holding position of the robotic hand (120) specified by the holding position specifying process as a nearest neighbor portion, among corners of the rectangle, the rectangle being obtained through the approximation in the rectangle approximation process;
a pivot center specifying process of specifying, as a pivot center (LC), an opposed portion opposed to the nearest neighbor portion specified by the nearest neighbor portion specifying process; and
a robotic hand control process of controlling the robotic hand (120) so that the held uppermost workpiece (Wt) is lifted, while being turned around the opposed portion specified by the pivot center specifying process,
wherein
the robotic hand (120) is configured to hold the uppermost workpiece (Wt), **characterized in that**
the nearest neighbor portion specifying process calculates distances between the four sides forming the rectangle and end portions of suction pads of suction parts of the robotic hand (120) nearest to the respective sides, and specifies the side having the shortest distance as the nearest neighbor portion, or calculates distances between the four corners forming the rectangle and the end portions of suction pads of suction parts of the robotic hand (120) nearest to the respective corners, and specifies the corner having the shortest distance as the nearest neighbor portion,
the opposed portion is a side of the rectangle opposed to the nearest neighbor portion when the nearest neighbor portion is a side of the rectangle, or a corner of the rectangle opposed to the nearest neighbor portion when the nearest neighbor portion is a corner of the rectangle, and
the robotic hand control process controls the robotic hand (120) so as to hold the uppermost workpiece (Wt) for a predetermined standby time in a state in which the uppermost workpiece (Wt) is turned around the opposed portion.

## Patentansprüche

1. Werkstückzuführsystem (1, 1'), umfassend:
einen Werkstückzuführroboter (100), der dazu eingerichtet ist, ein oberstes Werkstück (Wt) aus einer auf einem Werkstückauflagetisch (10) gestapelten Werkstückgruppe zu transportieren; und
eine Robotersteuereinheit (230),
wobei
der Werkstückzuführroboter (100) eine Roboterhand (120) umfasst, die dazu eingerichtet ist, das oberste Werkstück (Wt) zu halten,
die Robotersteuereinheit (230) dazu eingerichtet ist, auszuführen:
einen Haltepositionsbestimmungsprozess zum Bestimmen einer Halteposition der Roboterhand (120) in Bezug auf das oberste Werkstück (Wt);
einen Rechteckapproximationsprozess zum Approximieren einer Form des obersten Werkstücks (Wt), um ein Rechteck zu erhalten, das das oberste Werkstück (Wt) enthält;
einen Prozess zum Bestimmen eines nächstgelegenen Nachbarabschnitts zum Bestimmen einer Seite, die der durch den Haltepositionsbestimmungsprozess bestimmten Halteposition der Roboterhand (120) am nächsten liegt, als einen nächstgelegenen Nachbarabschnitt unter den Seiten des Rechtecks, oder einer Ecke, die der durch den Haltepositionsbestimmungsprozess bestimmten Halteposition der Roboterhand (120) am nächsten liegt, als einen nächstgelegenen Nachbarabschnitt unter den Ecken des Rechtecks, wobei das Rechteck durch Approximation in dem Rechteckapproximationsprozess erhalten wird;
einen Drehzentrumsbestimmungsprozess zum Bestimmen, als ein Drehzentrum (LC), eines gegenüberliegenden Abschnitts, der dem durch den Prozess zum Bestimmen eines nächstgelegenen Nachbarabschnitts bestimmten nächstgelegenen Nachbarabschnitt gegenüberliegt; und
einen Roboterhandsteuerprozess zum Steuern der Roboterhand (120), sodass das gehaltene oberste Werkstück (Wt) angehoben wird, während es um den durch den Drehzentrumsbestimmungsprozess bestimmten gegenüberliegenden Abschnitt gedreht wird,
**dadurch gekennzeichnet, dass**
der Prozess zum Bestimmen eines nächstgelegenen Nachbarabschnitts Abstände zwischen den vier das Rechteck bildenden Seiten und Endabschnitten von Saugnäpfen von Saugteilen der Roboterhand (120), die den jeweiligen Seiten am nächsten liegen, berechnet und die Seite mit dem kürzesten Abstand als den nächstgelegenen Nachbarabschnitt bestimmt, oder Abstände zwischen den vier das Rechteck bildenden Ecken und den Endabschnitten von Saugnäpfen von Saugteilen der Roboterhand (120), die den jeweiligen Ecken am nächsten liegen, berechnet und die Ecke mit dem kürzesten Abstand als den nächstgelegenen Nachbarabschnitt bestimmt,
der gegenüberliegende Abschnitt eine Seite des Rechtecks ist, die dem nächstgelegenen Nachbarabschnitt gegenüberliegt, wenn der nächstgelegene Nachbarabschnitt eine Seite des Rechtecks ist, oder eine Ecke des Rechtecks ist, die dem nächstgelegenen Nachbarabschnitt gegenüberliegt, wenn der nächstgelegene Nachbarabschnitt eine Ecke des Rechtecks ist, und
der Roboterhandsteuerprozess die Roboterhand (120) so steuert, dass das oberste Werkstück (Wt) für eine vorbestimmte Wartezeit in einem Zustand gehalten wird, in dem das oberste Werkstück (Wt) um den gegenüberliegenden Abschnitt gedreht ist.

2. Werkstückzuführsystem (1, 1') nach Anspruch 1, wobei der Drehzentrumsbestimmungsprozess als das Drehzentrum (LC) die Seite bestimmt, die einer längsten nächstgelegenen Nachbarseite gegenüberliegt, wenn zwei oder mehr nächstgelegene Nachbarseiten in dem Prozess zum Bestimmen eines nächstgelegenen Nachbarabschnitts bestimmt werden.

3. Werkstückzuführsystem (1, 1') nach Anspruch 2, wobei der Drehzentrumsbestimmungsprozess als das Drehzentrum (LC) die Seite bestimmt, die der längsten nächstgelegenen Nachbarseite mit einem Hindernis in einer Umgebung gegenüberliegt, wenn zwei oder mehr längste nächstgelegene Nachbarseiten vorhanden sind.

4. Werkstückzuführverfahren, umfassend:
einen Haltepositionsbestimmungsprozess zum Bestimmen einer Halteposition einer Roboterhand (120) in Bezug auf ein oberstes Werkstück (Wt) in einer auf einem Werkstückauflagetisch (10) gestapelten Werkstückgruppe;
einen Rechteckapproximationsprozess zum Approximieren einer Form des obersten Werkstücks (Wt), um ein Rechteck zu erhalten, das das oberste Werkstück (Wt) enthält;
einen Prozess zum Bestimmen eines nächstgelegenen Nachbarabschnitts zum Bestimmen einer Seite, die der durch den Haltepositionsbestimmungsprozess bestimmten Halteposition der Roboterhand (120) am nächsten liegt, als einen nächstgelegenen Nachbarabschnitt unter den Seiten des Rechtecks, oder einer Ecke, die der durch den Haltepositionsbestimmungsprozess bestimmten Halteposition der Roboterhand (120) am nächsten liegt, als einen nächstgelegenen Nachbarabschnitt unter den Ecken des Rechtecks, wobei das Rechteck durch Approximation in dem Rechteckapproximationsprozess erhalten wird;
einen Drehzentrumsbestimmungsprozess zum Bestimmen, als ein Drehzentrum (LC), eines gegenüberliegenden Abschnitts, der dem durch den Prozess zum Bestimmen eines nächstgelegenen Nachbarabschnitts bestimmten nächstgelegenen Nachbarabschnitt gegenüberliegt; und
einen Roboterhandsteuerprozess zum Steuern der Roboterhand (120), sodass das gehaltene oberste Werkstück (Wt) angehoben wird, während es um den durch den Drehzentrumsbestimmungsprozess bestimmten gegenüberliegenden Abschnitt gedreht wird,
wobei
die Roboterhand (120) dazu eingerichtet ist, das oberste Werkstück (Wt) zu halten,
**dadurch gekennzeichnet, dass**
der Prozess zum Bestimmen eines nächstgelegenen Nachbarabschnitts Abstände zwischen den vier das Rechteck bildenden Seiten und Endabschnitten von Saugnäpfen von Saugteilen der Roboterhand (120), die den jeweiligen Seiten am nächsten liegen, berechnet und die Seite mit dem kürzesten Abstand als den nächstgelegenen Nachbarabschnitt bestimmt, oder Abstände zwischen den vier das Rechteck bildenden Ecken und den Endabschnitten von Saugnäpfen von Saugteilen der Roboterhand (120), die den jeweiligen Ecken am nächsten liegen, berechnet und die Ecke mit dem kürzesten Abstand als den nächstgelegenen Nachbarabschnitt bestimmt,
der gegenüberliegende Abschnitt eine Seite des Rechtecks ist, die dem nächstgelegenen Nachbarabschnitt gegenüberliegt, wenn der nächstgelegene Nachbarabschnitt eine Seite des Rechtecks ist, oder eine Ecke des Rechtecks ist, die dem nächstgelegenen Nachbarabschnitt gegenüberliegt, wenn der nächstgelegene Nachbarabschnitt eine Ecke des Rechtecks ist, und
der Roboterhandsteuerprozess die Roboterhand (120) so steuert, dass das oberste Werkstück (Wt) für eine vorbestimmte Wartezeit in einem Zustand gehalten wird, in dem das oberste Werkstück (Wt) um den gegenüberliegenden Abschnitt gedreht ist.

5. Werkstückzuführprogramm, umfassend Anweisungen, die, wenn das Programm von einer Robotersteuereinheit (230) ausgeführt wird, bewirken, dass die Robotersteuereinheit (230) Folgendes ausführt:
einen Haltepositionsbestimmungsprozess zum Bestimmen einer Halteposition einer Roboterhand (120) in Bezug auf ein oberstes Werkstück (Wt) in einer auf einem Werkstückauflagetisch (10) gestapelten Werkstückgruppe;
einen Rechteckapproximationsprozess zum Approximieren einer Form des obersten Werkstücks (Wt), um ein Rechteck zu erhalten, das das oberste Werkstück (Wt) enthält;
einen Prozess zum Bestimmen eines nächstgelegenen Nachbarabschnitts zum Bestimmen einer Seite, die der durch den Haltepositionsbestimmungsprozess bestimmten Halteposition der Roboterhand (120) am nächsten liegt, als einen nächstgelegenen Nachbarabschnitt unter den Seiten des Rechtecks, oder einer Ecke, die der durch den Haltepositionsbestimmungsprozess bestimmten Halteposition der Roboterhand (120) am nächsten liegt, als einen nächstgelegenen Nachbarabschnitt unter den Ecken des Rechtecks, wobei das Rechteck durch Approximation in dem Rechteckapproximationsprozess erhalten wird;
einen Drehzentrumsbestimmungsprozess zum Bestimmen, als ein Drehzentrum (LC), eines gegenüberliegenden Abschnitts, der dem durch den Prozess zum Bestimmen eines nächstgelegenen Nachbarabschnitts bestimmten nächstgelegenen Nachbarabschnitt gegenüberliegt; und
einen Roboterhandsteuerprozess zum Steuern der Roboterhand (120), sodass das gehaltene oberste Werkstück (Wt) angehoben wird, während es um den durch den Drehzentrumsbestimmungsprozess bestimmten gegenüberliegenden Abschnitt gedreht wird,
wobei
die Roboterhand (120) dazu eingerichtet ist, das oberste Werkstück (Wt) zu halten,
**dadurch gekennzeichnet, dass**
der Prozess zum Bestimmen eines nächstgelegenen Nachbarabschnitts Abstände zwischen den vier das Rechteck bildenden Seiten und Endabschnitten von Saugnäpfen von Saugteilen der Roboterhand (120), die den jeweiligen Seiten am nächsten liegen, berechnet und die Seite mit dem kürzesten Abstand als den nächstgelegenen Nachbarabschnitt bestimmt, oder Abstände zwischen den vier das Rechteck bildenden Ecken und den Endabschnitten von Saugnäpfen von Saugteilen der Roboterhand (120), die den jeweiligen Ecken am nächsten liegen, berechnet und die Ecke mit dem kürzesten Abstand als den nächstgelegenen Nachbarabschnitt bestimmt,
der gegenüberliegende Abschnitt eine Seite des Rechtecks ist, die dem nächstgelegenen Nachbarabschnitt gegenüberliegt, wenn der nächstgelegene Nachbarabschnitt eine Seite des Rechtecks ist, oder eine Ecke des Rechtecks ist, die dem nächstgelegenen Nachbarabschnitt gegenüberliegt, wenn der nächstgelegene Nachbarabschnitt eine Ecke des Rechtecks ist, und
der Roboterhandsteuerprozess die Roboterhand (120) so steuert, dass das oberste Werkstück (Wt) für eine vorbestimmte Wartezeit in einem Zustand gehalten wird, in dem das oberste Werkstück (Wt) um den gegenüberliegenden Abschnitt gedreht ist.

## Revendications

1. Système d'alimentation de pièces à travailler (1, 1'), comprenant :
un robot d'alimentation de pièces à travailler (100) configuré pour transporter une pièce à travailler supérieure (Wt) à partir d'un groupe de pièces à travailler empilé sur une table de support de pièces à travailler (10) ; et
une unité de commande du robot (230),
dans lequel
le robot d'alimentation de pièces à travailler (100) comprend une main robotisée (120) configurée pour maintenir la pièce à travailler supérieure (Wt),
l'unité de commande du robot (230) est configurée pour exécuter :
un processus de détermination de la position de maintien consistant à déterminer une position de maintien de la main robotisée (120) par rapport à la pièce à travailler supérieure (Wt) ;
un processus d'approximation par rectangle consistant à approximer une forme de la pièce à travailler supérieure (Wt) de manière à obtenir un rectangle contenant la pièce à travailler supérieure (Wt) ;
un processus de détermination de la portion voisine la plus proche consistant à déterminer un côté le plus proche de la position de maintien de la main robotisée (120) déterminée par le processus de détermination de la position de maintien en tant que portion voisine la plus proche parmi les côtés du rectangle, ou un coin le plus proche de la position de maintien de la main robotisée (120) déterminée par le processus de détermination de la position de maintien en tant que portion voisine la plus proche parmi les coins du rectangle, le rectangle étant obtenu par approximation dans le processus d'approximation par rectangle ;
un processus de détermination du centre de pivotement consistant à déterminer, en tant que centre de pivotement (LC), une portion opposée, opposée à la portion voisine la plus proche déterminée par le processus de détermination de la portion voisine la plus proche ; et
un processus de commande de la main robotisée consistant à commander la main robotisée (120) de telle sorte que la pièce à travailler supérieure (Wt) maintenue soit soulevée tout en étant pivotée autour de la portion opposée déterminée par le processus de détermination du centre de pivotement,
**caractérisé en ce que**
le processus de détermination de la portion voisine la plus proche calcule des distances entre les quatre côtés formant le rectangle et des portions d'extrémité de ventouses de parties d'aspiration de la main robotisée (120) les plus proches des côtés respectifs, et détermine le côté présentant la distance la plus courte en tant que portion voisine la plus proche, ou calcule des distances entre les quatre coins formant le rectangle et les portions d'extrémité de ventouses de parties d'aspiration de la main robotisée (120) les plus proches des coins respectifs, et détermine le coin présentant la distance la plus courte en tant que portion voisine la plus proche,
la portion opposée est un côté du rectangle opposé à la portion voisine la plus proche lorsque la portion voisine la plus proche est un côté du rectangle, ou un coin du rectangle opposé à la portion voisine la plus proche lorsque la portion voisine la plus proche est un coin du rectangle, et
le processus de commande de la main robotisée commande la main robotisée (120) de manière à maintenir la pièce à travailler supérieure (Wt) pendant un temps d'attente prédéterminé dans un état dans lequel la pièce à travailler supérieure (Wt) est pivotée autour de la portion opposée.

2. Système d'alimentation de pièces à travailler (1, 1') selon la revendication 1, dans lequel le processus de détermination du centre de pivotement détermine, en tant que centre de pivotement (LC), le côté opposé à un côté voisin le plus proche le plus long si deux côtés voisins les plus proches ou davantage sont déterminés dans le processus de détermination de la portion voisine la plus proche.

3. Système d'alimentation de pièces à travailler (1, 1') selon la revendication 2, dans lequel le processus de détermination du centre de pivotement détermine, en tant que centre de pivotement (LC), le côté opposé au côté voisin le plus proche le plus long avec un obstacle à proximité s'il existe deux côtés voisins les plus proches les plus longs ou davantage.

4. Procédé d'alimentation de pièces à travailler, comprenant :
un processus de détermination de la position de maintien consistant à déterminer une position de maintien d'une main robotisée (120) par rapport à une pièce à travailler supérieure (Wt) dans un groupe de pièces à travailler empilé sur une table de support de pièces à travailler (10) ;
un processus d'approximation par rectangle consistant à approximer une forme de la pièce à travailler supérieure (Wt) de manière à obtenir un rectangle contenant la pièce à travailler supérieure (Wt) ;
un processus de détermination de la portion voisine la plus proche consistant à déterminer un côté le plus proche de la position de maintien de la main robotisée (120) déterminée par le processus de détermination de la position de maintien en tant que portion voisine la plus proche parmi les côtés du rectangle, ou un coin le plus proche de la position de maintien de la main robotisée (120) déterminée par le processus de détermination de la position de maintien en tant que portion voisine la plus proche parmi les coins du rectangle, le rectangle étant obtenu par approximation dans le processus d'approximation par rectangle ;
un processus de détermination du centre de pivotement consistant à déterminer, en tant que centre de pivotement (LC), une portion opposée, opposée à la portion voisine la plus proche déterminée par le processus de détermination de la portion voisine la plus proche ; et
un processus de commande de la main robotisée consistant à commander la main robotisée (120) de telle sorte que la pièce à travailler supérieure (Wt) maintenue soit soulevée tout en étant pivotée autour de la portion opposée déterminée par le processus de détermination du centre de pivotement,
dans lequel
la main robotisée (120) est configurée pour maintenir la pièce à travailler supérieure (Wt),
**caractérisé en ce que**
le processus de détermination de la portion voisine la plus proche calcule des distances entre les quatre côtés formant le rectangle et des portions d'extrémité de ventouses de parties d'aspiration de la main robotisée (120) les plus proches des côtés respectifs, et détermine le côté présentant la distance la plus courte en tant que portion voisine la plus proche, ou calcule des distances entre les quatre coins formant le rectangle et les portions d'extrémité de ventouses de parties d'aspiration de la main robotisée (120) les plus proches des coins respectifs, et détermine le coin présentant la distance la plus courte en tant que portion voisine la plus proche,
la portion opposée est un côté du rectangle opposé à la portion voisine la plus proche lorsque la portion voisine la plus proche est un côté du rectangle, ou un coin du rectangle opposé à la portion voisine la plus proche lorsque la portion voisine la plus proche est un coin du rectangle, et
le processus de commande de la main robotisée commande la main robotisée (120) de manière à maintenir la pièce à travailler supérieure (Wt) pendant un temps d'attente prédéterminé dans un état dans lequel la pièce à travailler supérieure (Wt) est pivotée autour de la portion opposée.

5. Programme d'alimentation de pièces à travailler, comprenant des instructions qui, lorsque le programme est exécuté par une unité de commande du robot (230), amènent l'unité de commande du robot (230) à exécuter :
un processus de détermination de la position de maintien consistant à déterminer une position de maintien d'une main robotisée (120) par rapport à une pièce à travailler supérieure (Wt) dans un groupe de pièces à travailler empilé sur une table de support de pièces à travailler (10) ;
un processus d'approximation par rectangle consistant à approximer une forme de la pièce à travailler supérieure (Wt) de manière à obtenir un rectangle contenant la pièce à travailler supérieure (Wt) ;
un processus de détermination de la portion voisine la plus proche consistant à déterminer un côté le plus proche de la position de maintien de la main robotisée (120) déterminée par le processus de détermination de la position de maintien en tant que portion voisine la plus proche parmi les côtés du rectangle, ou un coin le plus proche de la position de maintien de la main robotisée (120) déterminée par le processus de détermination de la position de maintien en tant que portion voisine la plus proche parmi les coins du rectangle, le rectangle étant obtenu par approximation dans le processus d'approximation par rectangle ;
un processus de détermination du centre de pivotement consistant à déterminer, en tant que centre de pivotement (LC), une portion opposée, opposée à la portion voisine la plus proche déterminée par le processus de détermination de la portion voisine la plus proche ; et
un processus de commande de la main robotisée consistant à commander la main robotisée (120) de telle sorte que la pièce à travailler supérieure (Wt) maintenue soit soulevée tout en étant pivotée autour de la portion opposée déterminée par le processus de détermination du centre de pivotement,
dans lequel
la main robotisée (120) est configurée pour maintenir la pièce à travailler supérieure (Wt),
**caractérisé en ce que**
le processus de détermination de la portion voisine la plus proche calcule des distances entre les quatre côtés formant le rectangle et des portions d'extrémité de ventouses de parties d'aspiration de la main robotisée (120) les plus proches des côtés respectifs, et détermine le côté présentant la distance la plus courte en tant que portion voisine la plus proche, ou calcule des distances entre les quatre coins formant le rectangle et les portions d'extrémité de ventouses de parties d'aspiration de la main robotisée (120) les plus proches des coins respectifs, et détermine le coin présentant la distance la plus courte en tant que portion voisine la plus proche,
la portion opposée est un côté du rectangle opposé à la portion voisine la plus proche lorsque la portion voisine la plus proche est un côté du rectangle, ou un coin du rectangle opposé à la portion voisine la plus proche lorsque la portion voisine la plus proche est un coin du rectangle, et
le processus de commande de la main robotisée commande la main robotisée (120) de manière à maintenir la pièce à travailler supérieure (Wt) pendant un temps d'attente prédéterminé dans un état dans lequel la pièce à travailler supérieure (Wt) est pivotée autour de la portion opposée.
